(19) Europäisches Patentamt
European Patent Office
Office européen des brevets

(11) Veröffentlichungsnummer : **0 038 322**
**B1**

(12) **EUROPÄISCHE PATENTSCHRIFT**

(45) Veröffentlichungstag der Patentschrift : **22.06.83**

(51) Int. Cl.$^3$ : **C 22 B 7/00**, C 22 B 3/00

(21) Anmeldenummer : **81890066.4**

(22) Anmeldetag : **14.04.81**

(54) **Verfahren zur Rückgewinnung von Metallen aus Metallsalzlösungen.**

(30) Priorität : **16.04.80 AT 2060/80**
**12.12.80 AT 6053/80**

(43) Veröffentlichungstag der Anmeldung :
**21.10.81 Patentblatt 81/42**

(45) Bekanntmachung des Hinweises auf die Patenterteilung : **22.06.83 Patentblatt 83/25**

(84) Benannte Vertragsstaaten :
**BE DE FR GB IT LU NL SE**

(56) Entgegenhaltungen :
**DE A 2 406 408**
**DE A 2 623 658**
**DE B 1 262 734**
**DE B 2 524 546**
**DE B 2 743 812**
**US A 1 275 374**
**D. A. Neumüller, Basis-Römpp, Bd 2, M-Z, Franckh'sche Verlagshandlung Stuttgart 1977 S487**

(73) Patentinhaber : **VOEST-ALPINE Aktiengesellschaft**
**Friedrichstrasse 4**
**A-1011 Wien (AT)**

(72) Erfinder : **Walter, Hans**
**Burggasse 12**
**A-8652 Kindberg/Aumühl (AT)**
Erfinder : **Reiterer, Hans Detlef, Dr.**
**Sandgasse 47**
**A-8010 Graz (AT)**
Erfinder : **Eichberger, Ernst, Dipl.-Ing.**
**Grüne Zeile 5**
**A-4600 Wels (AT)**
Erfinder : **Lazar, Gerhard, Dr.**
**Leibnizstrasse 39**
**A-4020 Linz (AT)**

(74) Vertreter : **Kretschmer, Adolf, Dipl.-Ing.**
**Schottengasse 3a**
**A-1014 Wien (AT)**

**EP 0 038 322 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Rückgewinnung von Metallen aus Metallsalzlösungen

Die Erfindung bezieht sich auf ein Verfahren zur Rückgewinnung von Metallen der Gruppen 1B, 2B, 4A, 5A, 6A, 7A und 8 des periodischen Systems (nach den IUPAC-Regeln) aus ihren Salzlösungen, insbesondere aus salzsäurehältigen Lösungen. Die Metalle der genannten Nebengruppen zeichnen sich durch mehr oder minder unlösliche Karbonate bzw. Hydroxyde oder Oxydhydrate aus und treten in einer mehr oder weniger großen Anzahl verschiedener Wertigkeitsstufen auf. Für die Rückgewinnung dieser Metalle aus Ätzlösungen für diese Metalle bzw. von Metallen aus Abbeizen, wie sie beispielsweise in der Printplattenindustrie anfallen, wurden bereits eine Reihe von Verfahren vorgeschlagen, welche durchwegs einen hohen technischen Aufwand erforderten. Eine elektrolytische Rückgewinnung aus den eingangs genannten Metallsalzlösungen wird durch die mehr oder minder hohe Chloridkonzentration so weit erschwert, daß sie nur bei Anwendung aufwendiger technologischer Vorkehrungen möglich erscheint. In Anwesenheit von salzsauren Lösungen ist es bei den eingangs genannten Metallen nicht möglich, chloridfreie Niederschläge auszufällen. Bei den bekannten Verfahren zur Behandlung der eingangs genannten Salzlösungen wird unter Verwendung von Natronlauge, Soda und/oder gebranntem Kalk neutralisiert, worauf der gebildete Niederschlag abgetrennt wird. Der Niederschlag aus kupfersalzhaltigen Lösungen der Printplatten und Elektronikbauteileindustrie kann hiebei etwa 50 % Kupfer enthalten. Da die Ätzlösungen in der Printplattenindustrie in der Regel Wasserstoffperoxyd und Salzsäure enthalten, enthalten auch die ausgefällten Kupferniederschläge mehr oder minder große Mengen an Chloriden.

Zur Aufarbeitung von Kupfersalzen, insbesondere Kupferchloriden, ist bereits ein Verfahren bekannt geworden, bei welchem Kupfer(II)-Salze unter Verwendung von $SO_2$ zu Kupfer(I)-Salzen reduziert werden. Die diesbezüglichen Anlagen sind aufwendig und unter Berücksichtigung wirtschaftlicher Überlegungen in keiner Weise geeignet, quantitative Umwandlungen zu erzielen.

$$2\,CuCl_2 + SO_2 + 2\,H_2O = 2\,CuCl + H_2SO_4 + 2\,HCl \qquad (1)$$

Das auf diese Weise gebildete Kupfer(I)-Chlorid wurde gemäß einem bekannten Vorschlag in der Folge mit Kalziumkarbonat oder Kalziumoxyd und Kohle oder Koks über längere Zeit erhitzt, um Kupfer(I) zu metallischem Kupfer zu reduzieren.

$$2\,CuCl + CaO + C = 2\,Cu + CaCl_2 + CO \qquad (2)$$

$$2\,CuCl + CaCO_3 + C = 2\,Cu + CaCl_2 + CO_2 + CO \qquad (3)$$

Die Erfindung sucht nun ein Verfahren zur Aufarbeitung der eingangs genannten Metallsalzlösungen zu schaffen, welches einfacher und rascher durchführbar ist. Zur Lösung dieser Aufgabe ist die Erfindung im wesentlichen dadurch gekennzeichnet, daß die sauren Metallsalzlösungen zur Fällung der Metalle als Hydroxyde oder Karbonate neutralisiert werden, daß hierauf nach Abpressen des Niederschlages fein verteiltes Metal desjenigen Metalls, welches als Salz vorliegt, zusammen mit einem Kohlenstoffträger aus Abfallprodukten, insbesondere in Form von vermahlenen Duroplasten wie Phenolharzen, Aminformaldehydharzen, Epoxyharzen, Polyestern, und $CaCO_3$ zugesetzt wird, wobei alle Bestandteile dieses Gemenges feinkörnig, vorzugsweise mit einer maximalen Korngröße von 0,5 mm, eingesetzt werden, und daß dieses Gemenge mechanisch bewegt und zur Reduktion des als Salz vorliegenden Metalls auf eine Temperatur oberhalb des Schmelzpunktes des jeweiligen Metalls erhitzt wird. Wesentliches Merkmal des erfindungsgemäßen Verfahrens ist hiebei, daß unmittelbar aus derjenigen Oxydationsstufe, in welcher das Metall bei der neutralisation als Karbonat oder Oxydhydrat bzw. Hydroxyd ausgefällt wird, in Anwesenheit des fein verteilten reduzierten Metalls, welches einen autokatalytischen Effekt im Sinne eines Redoxgleichgewichtes ausübt, in nur einer Verfahrensstufe zu Metall reduziert wird. Hiebei werden die der Reduktion zu unterwerfenden Feststoffe der Mischung feinkörnig, vorzugsweise mit einer maximalen Korngröße von 0,5 mm, insbesondere mit maximalen Korngrößen von 0,1 bis 0,2 mm, eingesetzt, wodurch die Reaktionsgeschwindigkeit der Feststoffreaktionen wesentlich erhöht wird.

Vorzugsweise wird bei der Aufarbeitung von Kupfer-Salzlösungen aus der Printplattenbeizerei die Neutralisation lediglich mit Kalziumkarbonat einer Korngröße von maximal 0,5 mm vorgenommen und bis zu einem pH-Wert von maximal 6 durchgeführt. Die Reaktionsgleichungen lassen sich hiebei wie folgt formulieren :

$$3\,CuCl_2 + H_2O + 3\,CaCO_3 \rightarrow$$

$$CuCl_2 \cdot Cu(OH)_2 \cdot CuCO_3 \cdot xH_2O + 2\,CaCl_2 + CO_2 \qquad (4)$$

Der auf diese Weise gewonnene Niederschlag enthält neben wechselnden Mengen an Chlorid auch unverbrauchten Kalk. Vorzugsweise wird nachfolgend so vorgegangen, daß metallisches Kupfer, sowie der Kohlenstoffträger in Form von fein gemahlenen Printplattenstanzabfällen, vorzugsweise in Mengen

von 10 bis 30 Gew.%, des zu reduzierenden Gemisches zugesetzt werden, und daß zur Reduktion des Kupfers auf Temperaturen von etwa 1 100 °C erhitzt wird. Durch die Printplattenstanzabfälle wird metallisches Kupfer eingebracht, welches mit Kupfer(II) wie folgt reagieren kann :

$$Cu(II) + Cu = 2\,Cu(I) \qquad (5)$$

Die Printplatten enthalten in der Regel etwa 10 % Kupfer bezogen auf ihr Gewicht. Die restlichen 90 % werden von Kunststoffen wie in Phenolharzen getränkten Papieren, Polyestern od. dgl., gebildet. Die verwendeten Kunststoffe sind Duroplaste und erlauben es, die Printplattenabfälle fein zu vermahlen. Beim Vermahlen der Printplattenabfälle ist es gleichzeitig möglich, die mit diesen printplatten verbundenen Kupferschichten äußerst feinkörnig einzubringen, wodurch der autokatalytische Effekt des Kupfers besser zur Wirkung gelangen kann. Der organische Anteil der Printplatten kann nach einer Verkohlung als Kohlenstoffträger herangezogen werden, wobei der zu behandelnde Neutralisationsniederschlag mit gemahlenem printplattenabfall und Kalk innig vermischt, in einem Hochtemperaturofen in gedeckten Tiegeln auf eine Temperatur von etwa 1 100 °C gebracht wird, wobei die Prozesse nach den Gleichungen (2), (3) und (5) simultan ablaufen. Das metallische Kupfer sammelt sich am Boden der Tiegel und kann gut von der Schlacke abgetrennt werden. Vorzugsweise wird hiefür während des Erhitzens bei gleichzeitiger mechanischer Bewegung des Gemisches, beispielsweise in einem Drehrohrofen, eine CO- und $Co_2$-hältige reduzierende Atmosphäre aufrechterhalten.

Erfindungemäß wird in vorteilhafter Weise dem zu reduzierenden Gemisch Kalziumkarbonat in Mengen von 10 bis 30 Gew.% bezogen auf das Gemisch zugesetzt.

Um die Verkohlung des insbesondere bei Printplatten in Form von Kunststoffen vorliegenden Kohlenstoffträgers sicherzustellen, wird vorzugsweise die Erhitzung in zwei Phasen vorgenommen, wobei in einer ersten Phase die Temperatur vorzugsweise mit einer Geschwindigkeit von 10 bis 20°/Min. auf 400 bis 500 °C gebracht wird, und in einer unmittelbar anschließenden zweiten Phase die Temperatur mit einer höheren Geschwindigkeit, vorzugsweise 20 bis 30°/Min. auf den Schmelzpunkt des zu reduzierenden Metalls erhöht wird. In der ersten Phase wird die für die Zersetzung des kunststoffes erforderliche Zeit durch die langsamere Erwärmung sichergestellt. Im Falle von Kupfersalzen wird die gesamte Darstellung des Kupfer(I)-Chlorides entbehrlich und damit ein aufwendiger und energieintensiver Verfahrensschritt erspart. Ein Teil der für die Reduktion erforderlichen Energie wird hiebei durch die Verkohlung der printplattenabfälle aufgebracht. Die Kosten des Verfahrens werden durch den Einsatz von Kalk, wie er ohnedies für den Reduktionsprozeß notwendig ist, stark gesenkt.

Da die Salzlösungen nicht nur als saure Salzlösungen vorliegen können, sondern vielmehr beispielsweise in der Printplattenindustrie auch als ammoniakalische Salzlösungen anfallen, kann erfindungsgemäß den sauren Salzlösungen vor ihrer Neutralisation mit $CaCO_3$ alkalische, insbesondere ammonialkalische Salzlösungen, des gleichen Metalls bis zur Erzielung eines pH-Wertes von maximal 3,5 zugesetzt werden. Auf diese Weise können saure und alkalische Salzlösungen gleichzeitig verarbeitet werden.

Bei einigen der eingangs genannten Metalle reicht eine Neutralisierung auf einen pH-Wert von 6 für die Ausfällung nicht aus. Vorzugsweise wird daher beispielsweise für die Fällung von Nickel anschließend an die Neutralisation mit $CaCO_3$ der pH-Wert auf Werte über 7, insbesondere 7,5, eingestellt.

Für die Rückgewinnung der Metalle eignen sich in erster Linie saure Abbeizen gegebenenfalls nach Zusatz von alkalischen oder ammonialkalischen Abbeizen der Metalle Ti, V, Cr, Mn, Fe, Co, Ni, Cu und Zn.

Bei dem erfindungsgemäßen Verfahren entstehen in der Reduktionszone CO-, $CO_2$- und wasserdampfhältige Abgase mit einer Temperatur von 1 200 bis 1 500 °C. Diese Abgase enthalten auch gasförmige, aus der unvollständigen Verbrennung von beispielsweise kunststoffabfällen als Kohlenstoffträger stammende Verbindungen, welche teils aggressiv und teils umweltschädlich sind.

Zur verbesserten Ausnutzung des Wärmeinhaltes der Ofenabgase sowie der Entfernung von Schadstoffen aus dem Abgas, welches gereinigt in die Atmosphäre entlassen werden soll, und insbesondere zum Zwecke, die aus den Reduktionsabgasen gewonnene Wärme in den prozeß zurückzuführen, sie also als Prozeßgase zu verwenden, wird das erfindungsgemäße Verfahren vorzugsweise so durchgeführt, daß die in der Reduktionszone gebildeten CO- und $CO_2$-hältigen Abgase nachverbrannt und in einer nachgeschalteten Trocknungszone zum Trocknen des abgepreßten Metallniederschlages verwendet werden, worauf die aus der Trocknungszone abgezogenen Abgase in einer Waschzone gereinigt und das aus der Waschzone kommende Waschwasser gegebenenfalls zur Erwärmung der zu neutralisierenden Metallsalzlösungen verwendet wird. Eine Erwärmung der sauren Metallsalzlösungen auf etwa 50 °C ist insbesondere bei der Neutralisation mit Kalk zur wesentlichen Verkürzung der Neutralisationszeit von Vorteil.

Die Erfindung wird nachfolgend an Hand von Ausführungsbeispielen sowie an Hand des in der Zeichnung dargestellten Fließschemas näher erläutert.

Das Reaktionsgemisch (Neutralisationsniederschlag, gemahlener Printplattenabfall < 1,5 mm, Kalk) wurde in keramischen Tiegeln mit Deckel in einem Hochtemperaturofen einer Temperatur von 1 100 °C ausgesetztt, wobei die Temperatur bis zur vollständigen Verkohlung der printplattenabfälle (mit Phenolharz getränkter Karton) langsam gesteigert wurde. Nach Erreichen von etwa 500 °C wurde die Temperatur rasch auf 1 100 °C gebracht. Die folgende Zusammenstellung zeigt die Ergebnisse der

Versuche bei verschiedenen Mischungsverhältnissen und Behandlungstemperaturen.

| Beispiel Nr. | Gewichtsteile Niederschl. : | Printplattenabfälle : | Kalk | Temperatur (°C) | Ergebnis |
|---|---|---|---|---|---|
| 1.) | 2 : | 1 : | 2 | 750 | Bildung von Cu-Oxyden, keine Reduktion des NS |
| 2.) | 2 : | 1 : | 1 | 750 | gleiche Ergebnisse wie 1 |
| 3.) | 4 : | 1 : | 1 | 750 | Gemisch aus Cu-Kügelchen und Cu-Oxyden |
| 4.) | 2 : | 1 : | 1 | 1 100 | besseres Ergebnis wie 3 |
| 5.) | 4 : | 1 : | 1 | 1 100 | Ausbildung von großen Cu-Kügelchen |

Aus den obigen Versuchen ergab sich, daß erst bei einem Arbeiten von knapp oberhalb des Schmelzpunktes von Kupfer, befriedigende Ergebnisse erzielt werden können. In den nachfolgenden weiteren Ausführungsbeispielen wurden die Mengen der drei Komponenten des Gemisches variiert und das jeweilige Ausbringen des Metalles bestimmt.

Beispiel 6

Als Einsatz wurde eine Mischung aus

10,0 g Niederschlag
3,01 g Printplattenabfall
3,08 g Kalk 98 %

verwendet.

Es wurde nach einer Behandlung bei einer Temperatur von 1 100 °C (1 Stunde) eine Kupfermenge von 3,99 g ausgewogen. Das entspricht einem Ausbringen von etwa 75 bis 80 %.

Beispiel 7

Als Einsatz wurde eine Mischung aus

6,0 g Niederschlag
3,02 g Printplattenabfall
3,01 g Kalk 98 %

verwendet.

Es wurde nach einer Behandlung bei einer Temperatur von 1 100 °C (1 Stunde) eine Kupfermenge von 2,51 g ausgewogen. Das entspricht einem Ausbringen von etwa 70 %.

Beispiel 8

Als Einsatz wurde eine Mischung aus

5,0 g Niederschlag
3,98 g Printplattenabfall
2,0 g Kalk 98 %

verwendet.

Es wurde nach einer Behandlung bei einer Temperatur von 1 100 °C (1 Stunde) eine Kupfermenge von 0,57 g ausgewogen. Das entspricht einem Ausbringen von etwa 20 %.

Beispiel 9

Als Einsatz wurde eine Mischung aus

3,14 g Niederschlag

0,67 g Printplattenabfall
1,09 g Kalk 98 %

verwendet.

Es wurde nach einer Behandlung bei einer Temperatur von 1 100 °C (1 Stunde) eine Kupfermenge von 0,87 g ausgewogen. Das entspricht einem Ausbringen von etwa 55 %.

In dem in der Zeichnung dargestellten Fließschema ist mit 1 ein Neutralisationsreaktor bezeichnet, welchem die sauren Matallsalzlösungen und das Neutralisationsmittel durch die Leitungen 2 und 3 zugeführt werden. Der Neutralisationsreaktor ist auf einer Temperatur von etwa 50 °C gehalten. Die gefällten Metallverbindungen werden in einer Kammerfilterpresse 4 abgepreßt und der Filterkuchen gelangt über die Leitung 5 in einen Trockner 6, der als Trommeltrockner ausgeführt sein kann. Die getrockneten Metallverbindungen werden über einen Abscheider 7 einem mit einem Rührer ausgestatteten Mischer 8 zugeführt, in welchem Mischer über die Leitung 9 feinverteiltes Metall, z. B. Kupfer, und über die Leitung 10 Kohlenstoffträger und gewünschtenfalls Flußmittel, wie $SiO_2$ oder $CaF_2$, zugeführt werden. Die Mischung gelangt über die Leitung 11 in den Reduktionsreaktor 12, der als Tiegelofen ausgeführt sein kann. Unter Zuführung von Wärme wird in dem Reaktor 12 die Reduktion durchgeführt, wobei die heißen Ofenabgase in der Haube 13 gesammelt und durch die Leitung 14 in eine Brennkammer 15 geleitet werden, wo sie nachverbrannt werden. Der Brennkammer 15 kann zusätzliche Wärme durch Verbrennung von Brennstoff aus einem Vorratsbehälter 16 zugeführt werden. Die hoch erhitzten, aus der Brennkammer kommenden Gase werden nun in den Trockner 6 als Trocknungsmedium für den abgepreßten Metallniederschlag zugeführt, wobei sich während der Trockenphase die Abgase auf 200 bis 300 °C abkühlen. Diese Trocknungsabgase werden über die Leitung 17 einem Wäscher 18 zugeführt, der als Venturi-Wäscher ausgebildet sein kann. Das gereinigte Abgas strömt über die Leitung 19 in den Kamin 20, während das warme Waschwasser über die Leitung 21 dem Neutralisationsreaktor zugeführt wird, wobei es zur Erwärmung der zu neutralisierenden Metallsalzlösungen, beispielsweise durch Wärmeaustauscher, verwendet wird.

**Ansprüche**

1. Verfahren zur Rückgewinnung von Metallen der Gruppen 1B, 2B, 4A, 5A, 6A, 7A und 8 des periodischen Systems aus ihren Salzlösungen, insbesondere aus salzsäurehältigen Lösungen, dadurch gekennzeichnet, daß die sauren metallsalzlösungen zur Fällung der Metalle als Hydroxyde oder Karbonate neutralisiert werden, daß hierauf nach Abpressen des Niederschlages fein verteiltes Metall desjenigen Metalles, welches als Salz vorliegt, zusammen mit einem Kohlenstoffträger aus Abfallprodukten, insbesondere in Form von vermahlenen Duroplasten wie Phenolharzen, Aminformaldehydharzen, Epoxyharzen, Polyestern, und $CaCO_3$ zugesetzt wird, wobei alle Bestandteile dieses Gemenges feinkörnig, vorzugsweise mit einer maximalen Korngröße von 0,5 mm, eingesetzt werden, und daß dieses Gemenge mechanisch bewegt und zur Reduktion des als Salz vorliegenden Metalles auf eine Temperatur oberhalb des Schmelzpunktes des jeweiligen Metalles erhitzt wird.

2. Verfahren nach Anspruch 1, dadurch gekennzeichnet, daß die Neutralisation insbesondere für die Fällung von Kupfer-Salzlösungen z. B. aus sauren Abbeizen der printplattenindustrie, mit Kalziumkarbonat einer Korngröße von maximal 0,5 mm vorgenommen wird und bis zu einem pH-Wert von maximal 6 durchgeführt wird.

3. Verfahren nach Anspruch 2, dadurch gekennzeichnet, daß metallisches Kupfer, sowie der Kohlenstoffträger in Form von fein gemahlenen Printplattenstanzabfällen, vorzugsweise in Mengen von 10 bis 30 Gew.% des zu reduzierenden Gemisches zugesetzt werden, und daß zur Reduktion des Kupfers auf Temperaturen von etwa 1 100 °C erhitzt wird.

4. Verfahren nach einem der Ansprüche 1, 2 oder 3, dadurch gekennzeichnet, daß während des Erhitzens bei gleichzeitiger mechanischer Bewegung des Gemisches, beispielsweise in einem Drehrohrofen, eine CO- und $CO_2$-hältige reduzierende Atmosphäre aufrechterhalten wird.

5. Verfahren nach einem der Ansprüche 1 bis 4, dadurch gekennzeichnet, daß dem zu reduzierenden Gemisch Kalziumkarbonat in Mengen von 10 bis 30 Gew.-% bezogen auf das Gemisch zugesetzt wird.

6. Verfahren nach einem der Ansprüche 1 bis 5, dadurch gekennzeichnet, daß die Erhitzung in zwei Phasen vorgenommen wird, wobei in einer ersten Phase die Temperatur vorzugsweise mit einer Geschwindigkeit von 10 bis 20°/Min. auf 400 bis 500 °C erhitzt wird und in einer unmittelbar anschließenden zweiten Phase die Temperatur mit einer höheren Geschwindigkeit, vorzugsweise 20 bis 30°/Min. auf den Schmelzpunkt des zu reduzierenden Metalles erhitzt wird.

7. Verfahren nach einem der Ansprüche 1 bis 6, dadurch gekennzeichnet, daß den sauren Salzlösungen vor ihrer Neutralisation mit $CaCO_3$ alkalische, insbesondere ammonialkalische Salzlösungen, des gleichen Metalls bis zur Erzielung eines pH-Wertes von maximal 3,5 zugesetzt werden.

8. Verfahren nach einem der Ansprüche 1, 2 oder 5 bis 7, dadurch gekennzeichnet, daß für die Fällung von Nickel anschließend an die Neutralisation mit $CaCO_3$ der pH-Wert auf Werte über 7, insbesondere 7,5, eingestellt wird.

9. Verfahren nach einem der Ansprüche 1 bis 8, dadurch gekennzeichnet, daß saure Abbeizen

gegebenenfalls nach Zusatz von alkalischen oder ammonialkalischen Abbeizen der Metalle Ti, V, Cr, Mn, Fe, Co, Ni, Cu und Zn für die Rückgewinnung eingesetzt werden.

10. Verfahren nach einem der Ansprüche 1 bis 9, dadurch gekennzeichnet, daß die in der Reduktionszone gebildeten CO- und $CO_2$-hältigen Abgase nachverbrannt und in einer nachgeschalteten Trocknungszone zum Trocknen des abgepreßten Metallniederschlages verwendet werden, worauf die aus der Trocknungszone abgezogenen Abgase in einer Waschzone gereinigt und das aus der Waschzone kommende Waschwasser gegebenenfalls zur Erwärmung der zu neutralisierenden Metallsalzlösungen verwendet wird.

## Claims

1. Process for recovering metals of the groups 1B, 2B, 4A, 5A, 6A, 7A and 8 of the Periodic System from their salt solutions, particularly from solutions containing hydrochloric acid, characterized in that the acidic metal salt solutions are neutralized for precipitating the metals in the form of hydroxides or carbonates, in that, after pressing the precipitate, finely divided metal of the metal being present as a salt is added together with $CaCO_3$ and a carbon carrier derived from waste products, in particular in the form of ground duroplastics such as phenolic resins, amine-formaldehyde-resins, epoxy resins or polyesters, all constituents of this mixture being used in fine-grained shape, preferably with a maximum grain size of 0.5 mm, and in that this mixture is mechanically agitated and heated to a temperature above the melting point of the metal in question for reducing the metal being present as a salt.

2. Process according to claim 1, characterized in that neutralization is effected, in particular for precipitating of copper salt solutions, e. g. derived from acidic waste pickling solutions of the printed circuit board industry, with calcium carbonate having a maximum grain size of 0.5 mm until a maximum pH-value of 6 is obtained.

3. Process according to claim 2, characterized in that metallic copper as well as the carbon carrier in the form of finely ground waste punchings of printed circuit boards, preferably in amounts of 10 to 30 per cent by weight of the mixture to be reduced, are added and in that heating is effected to temperatures of approximately 1 100 °C for reducing the copper.

4. Process according to any of claims 1, 2 or 3, characterized in that a reducing atmosphere containing CO and $CO_2$ is maintained during heating of the mixture with simultaneous agitation of the mixture, e. g. in a rotary kiln.

5. Process according to any of claims 1 to 4, characterized in that calcium carbonate is added to the mixture to be reduced in amounts of 10 to 30 per cent by weight, based on the mixture.

6. Process according to any of claims 1 to 5, characterized in that heating is effected in two stages, the temperature being increased in a first stage, preferably at a speed of 10 to 20° per minute, to 400 to 500 °C and the temperature being increased in an immediately following second stage at a higher speed of preferably 20 to 30° per minute up to the melting point of the metal to be reduced.

7. Process according to any of claims 1 to 6, characterized in that the acidic salt solutions are, prior to being neutralized with $CaCO_3$, added with alkaline, in particular ammoniacal, salt solutions of the same metal until a maximum pH-value of 3.5 is obtained.

8. Process according to any of claims 1, 2, or 5 through 7, characterized in that for the purpose of precipitating nickel, the pH-value is adjusted to values exceeding 7, particularly to 7.5, subsequently to the neutralization with $CaCO_3$.

9. Process according to any of claims 1 to 8, characterized in that acidic waste pickling solutions are used for recovering purposes, optionally after an addition of alkaline or ammoniacal waste pickling solutions of the metals Ti, V, Cr, Mn, Fe, Co, Ni, Cu and Zn.

10. Process according to any of claims 1 to 9, characterized in that the CO- and $CO_2$-containing gases formed in the reduction zone are subjected to a post-combustion and used in a subsequent drying zone for drying the pressed metal precipitate, whereupon the effluent gases withdrawn from the drying zone are purified in a washing zone and the water coming from the washing zone is, if desired, used for warming the metal salt solutions to be neutralized.

## Revendications

1. Procédé de récupération de métaux des groupes IB, 2B, 4A, 5A, 6A, 7A et 8 de la classification périodique des éléments à partir de leurs solutions salines, notamment à partir de solutions contenant de l'acide chlorhydrique, caractérisé en ce que les solutions de sels métalliques acides sont neutralisées en vue de la précipitation des métaux sous forme d'hydroxydes ou de carbonates, qu'ensuite, après filtration sous pression du précipité, un métal finement divisé du métal présent sous forme de sel est ajouté simultanément avec un support carboné provenant de sous-produits, en particulier sous forme de thermoplastes broyés tels que résines phénoliques, résines amino-formaldéhyde, résines époxydiques, polyesters et du $CaCO_3$, moyennant quoi tous les constituants de ce mélange sont mis en œuvre en grains fins, de préférence avec une granulométrie maximale de 0,5 mm et que ce mélange est brassé

mécaniquement et chauffé, en vue de la réduction du métal présent sous forme de sel, à une température au-dessus du point de fusion du métal considéré.

2. Procédé selon la revendication 1, caractérisé en ce que la neutralisation, notamment pour la précipitation de solutions de sels de cuivre provenant par exemple des mordants acides de l'industrie des plaques d'impression, s'effectue avec du carbonate de calcium d'une granulométrie maximale de 0,5 mm, et est conduite jusqu'à une valeur de pH de 6 au plus.

3. Procédé selon la revendication 2, caractérisé en ce qu'on ajoute du cuivre métallique ainsi que le support carboné sous forme de déchets de gravure de plaques d'impression finement broyés, de préférence à raison de 10 à 30 % en poids du mélange à réduire et qu'on chauffe, pour la réduction du cuivre, jusqu'à des températures d'environ 1 100 °C.

4. Procédé selon l'une quelconque des revendications 1, 2 ou 3, caractérisé en ce que, pendant le chauffage avec mise en mouvement mécanique simultanée du mélange, par exemple dans un four tubulaire rotatif, on maintient une atmosphère réductrice contenant du CO et du $CO_2$.

5. Procédé selon l'une quelconque des revendications 1 à 4, caractérisé en ce que le mélange à réduire est additionné de carbonate de calcium à raison de 10 à 30 % en poids par rapport au mélange.

6. Procédé selon l'une quelconque des revendications 1 à 5, caractérisé en ce que le chauffage s'effectue en deux phases, moyennant quoi, dans une première phase, la température est avantageusement portée à 400-500 °C avec une vitesse de 10 à 20°/min., et, dans une deuxième phase faisant immédiatement suite, la température est amenée, avec une vitesse plus élevée, de préférence à raison de 20 à 30°/min., au point de fusion du métal à réduire.

7. Procédé selon l'une quelconque des revendications 1 à 6, caractérisé en ce que les solutions salines acides sont additionnées, avant leur neutralisation avec $CaCO_3$, de solutions salines alcalines, notamment ammoniacales, du même métal jusqu'à obtention d'une valeur de pH de 3,5 au maximum.

8. Procédé selon l'une quelconque des revendications 1, 2 ou 5 à 7, caractérisé en ce que, pour la précipitation du nickel se rattachant à la neutralisation avec du $CaCO_3$, le pH est ajusté à des valeurs supérieures à 7, en particulier à 7,5.

9. Procédé selon l'une quelconque des revendications 1 à 8, caractérisé en ce que des mordants acides, éventuellement après addition de mordants alcalins ou ammoniacaux, des métaux Ti, V, Cr, Mn, Fe, Co, Ni, Cu et Zn sont mis en œuvre pour la récupération.

10. Procédé selon l'une quelconque des revendications 1 à 9, caractérisé en ce que les gaz résiduaires contenant du CO et du $CO_2$ formés dans la zone de réduction sont soumis à une postcombustion et utilisés dans une zone de séchage intercalée pour le séchage du précipité de métal filtré sous pression, après quoi les gaz résiduaires soutirés de la zone de séchage sont épurés dans une zone de lavage et l'eau de lavage provenant de la zone de lavage est éventuellement utilisée pour le chauffage des solutions de sels métalliques à réduire.

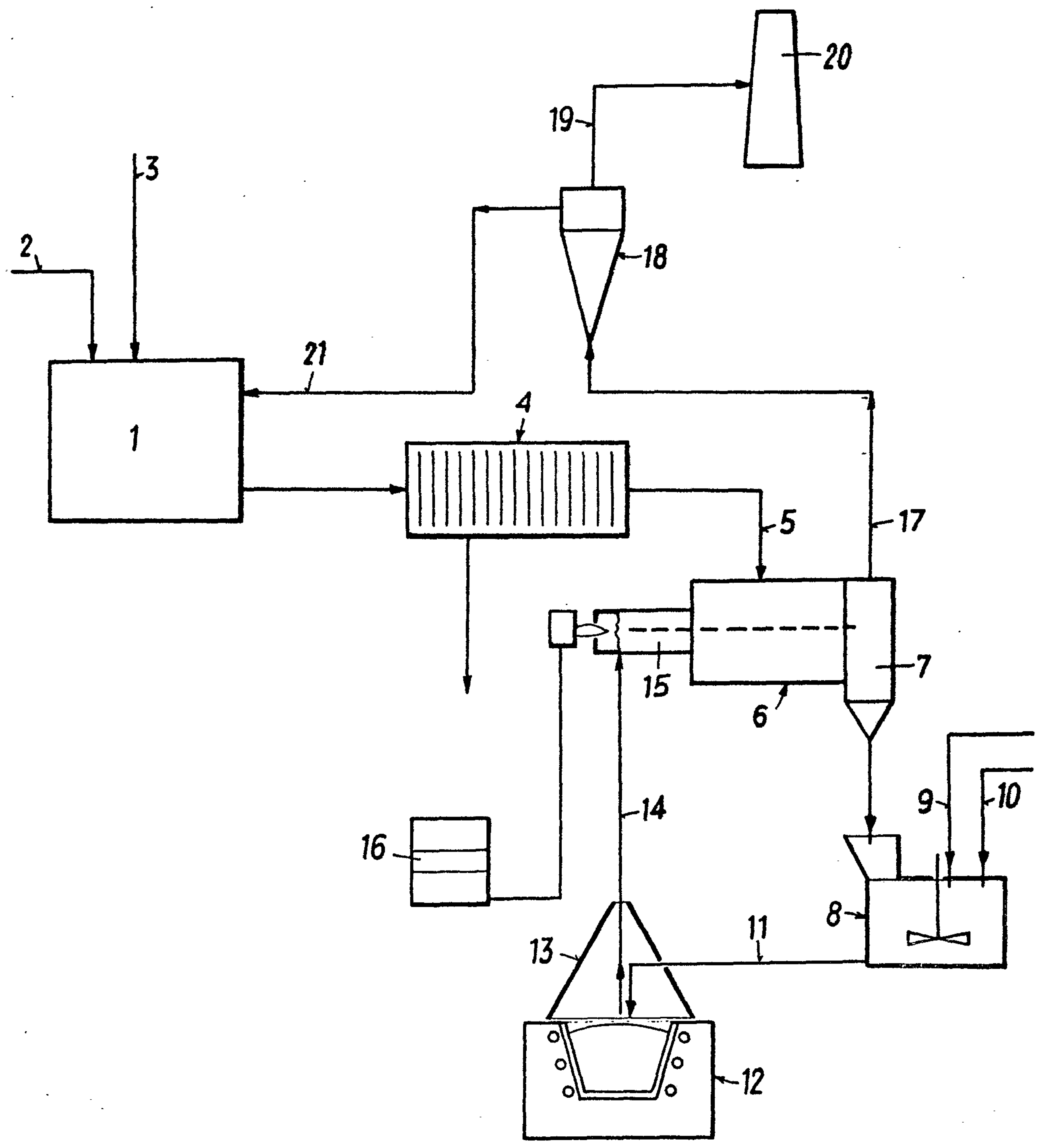
1
2
3
4
5
6
7
8
9
10
11
12
13
14
15
16
17
18
19
20
21